# EUROPEAN PATENT APPLICATION

(11) **EP 4 746 528 A1**
(43) Date of publication of application: **20.05.2026**
(21) Application number: 25215740.9
(22) Date of filing: 13.11.2025
(51) Int. Cl.: H04W 48/20, H04W 84/12, H04W 48/16, H04W 28/08

(54) **METHOD, SYSTEM, AND APPARATUS FOR BANDSTEERING 6 GHZ CLIENT STATIONS**

(30) Priority: 18.11.2024 IN 202441088959
(71) Applicant: NXP USA, Inc., Austin, TX 78735 (US)
(72) Inventor: MORE, Mahesh, 5656AG Eindhoven (NL); DEOKATE, Pradeep Arvind, 5656AG Eindhoven (NL); PATIL, Rohan Nagannath, 5656AG Eindhoven (NL); KULKARNI, Yogesh Upendra, 5656AG Eindhoven (NL)
(74) Representative: Hardingham, Christopher Mark

(57) **Abstract**

A method, system, and apparatus for bandsteering a client station to an access point. A non-6 GHz AP receives a plurality of probe requests from the client station and determines that the client station is operable to communicate with the 6 GHz AP based on an indication in the probe requests. A threshold estimated number of probe requests transmitted by the client station is ignored to bandsteeer the client station to connect to the 6 GHz AP based on the determination where the threshold is based on a number of probe requests transmitted by the client station in a scan cycle. A probe response is then transmitted after the threshold estimated number of the probe requests are transmitted by the client station, wherein the client station is allowed to connect to the non-6 GHz AP.

## Description

### FIELD OF USE

The present disclosure relates generally to bandsteering, and more particularly, to a method, system, and apparatus for bandsteering 6 GHz client stations to connect to an access point operating on a 6 GHz band.

### BACKGROUND

An AP device of a network infrastructure has two or more co-located access points (APs) implemented on a system-on-a-chip (SoC) or as a multi-chip solution and which have overlapping basic service set (BSS) coverage area. Each AP serves as an interface between a wired network and client station such as a desktop computer, laptop computer, tablet computer, and mobile smart phone which wirelessly transmits and receives data with an AP. Each AP operates in a respective frequency band such as in a 2.4 GHz band, 5 GHz band, or 6 GHz band as defined by the Institute of Electrical and Electronic Engineers (IEEE) 802.11 standard. The 2.4 GHz band has been available for communication for many years. The 5 GHz band and 6 GHz bands are newly introduced bands used by the client station for communication having decreased interference and medium contention compared to the 2.4 GHz band because less client stations use this band. The 6 GHz band is generally preferable over the 5 GHz band because the 6 GHz band has a greater number of channels to allow for bandwidth intensive communication with improved network efficiency.

Bandsteering is a process for steering a client station which is attempting to connect to an AP operating on one band such as a non-6 GHz band to connect to an AP operating on another band such as the 6 GHz band to make efficient use of the bands supported by the APs and reduce interference and medium contention when too many client stations are communicating on the non-6 GHz band.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is a block diagram of an example wireless communication system for bandsteering a client station to connect to an access point (AP) operating on the 6 GHz band in accordance with one or more embodiments.
FIG. 2 illustrates example operations associated with bandsteering the client station to connect to the 6 GHz AP before allowing a connection to a non-6 GHz AP in accordance with one or more embodiments.
FIG. 3 illustrates an example two-stage process for the non-6 GHz AP to estimate a number of transmitted probe requests from the client station to ignore to bandsteer the client station to connect to the 6 GHz AP in accordance with one or more embodiments.
FIG. 4 illustrates an example authentication and association phase handling to bandsteer the client station to connect to the 6 GHz AP after the client station is allowed to connect to the non-6 GHz AP in accordance with one or more embodiments.
FIG. 5 illustrates example functions associated with bandsteering the client station to connect to the 6 GHz AP after the client station connects to the non-6 GHz AP in accordance with one or more embodiments.
FIG. 6 is a flow chart of example functions associated with bandsteering the client station to connect to the 6 GHz AP in accordance with one or more embodiments.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the scope of the present disclosure.

Embodiments disclosed herein are directed to a method and system to bandsteer client stations attempting to connect to an access point (AP) operating on a non-6 GHz band (i.e., non-6 GHz AP) to connect to an AP operating on a 6 GHz band (i.e., 6 GHz AP) to make efficient use of available bands for communication. Client stations which support communication in a non-6 GHz band such as 2.4 GHz or 5 GHz and communication in the 6 GHz band are bandsteered to connect to the 6 GHz AP based on a capability detection phase, a scanning phase, an authentication/association phase, and an after connection phase. The capability detection phase involves determining whether the client station is capable of operating on the 6 GHz band. Only if the client station is capable of operating on the 6 GHz band is it bandsteered to connect to the 6 GHz AP. The scanning phase involves the client station sending probe requests to connect to the non-6 GHz AP when the client device is capable of operating on the 6 GHz band which the non-6 GHz AP ignores. The AP ignores an estimated number probe requests on a non-6 GHz band which is determined specifically for the client device and is not a fixed number of probe requests applied to all types of client station to persuade the client station to connect to the AP operating on the 6 GHz band. To further persuade the client station, the AP sends short beacons based on FILS - Fast Initial Link Setup (FILS) defined by IEEE 802.11 which contains reduced neighbor report (RNR) information of 6 GHz band APs to assist the client station to detect the 6 GHz AP when the probe requests are ignored. If the client station sends the estimated number of probe requests on the non-6 GHz band and the client station does not attempt to connect to the 6 GHz AP, then the client station is allowed to connect to the non-6 GHz AP. When the client station transmits an association request to the non-6 GHz AP to establish the connection, the non-6 GHz AP will reject the association request with an appropriate reason code. If the client station attempts to connect to the same non-6 GHz AP again, then the client station is allowed to connect to the non-6 GHz AP. For client stations which are already connected to non-6 GHz AP, the AP sends a basic service set (BSS) Transition Management (BTM) request to bandsteer the client station to connect to the 6 GHz AP. If the client station does not connect to the 6 GHz band after the BTM, then the connection to the non-6 GHz AP is terminated but if the client station attempts to connect to the non-6 GHz AP, the connection to the non-6 GHz AP is allowed. Well known instructions, protocols, structures, and techniques have not been shown in detail in order not to obfuscate the description.

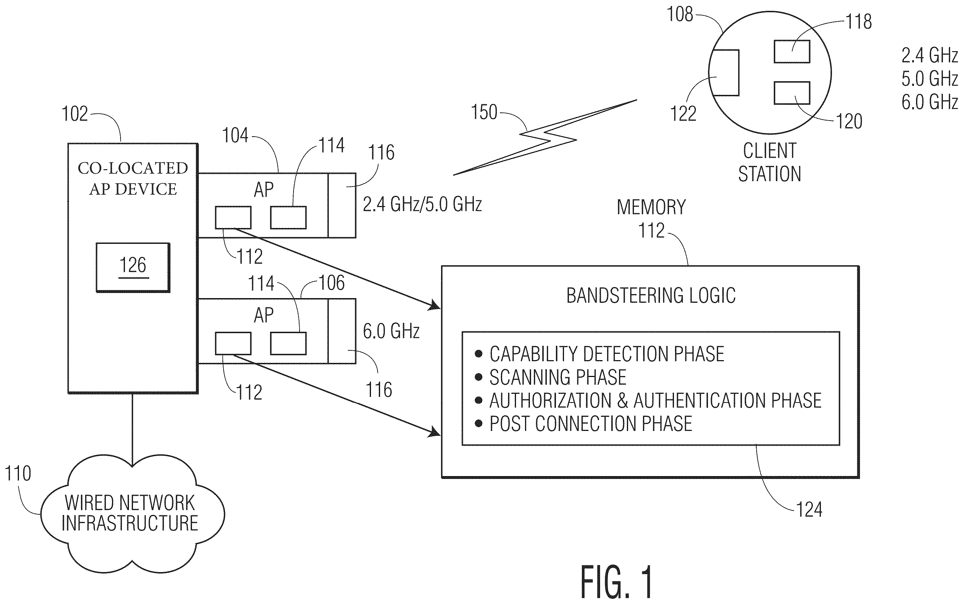

FIG. 1 is a block diagram of an example wireless communication system 100 for band steering a client station 108 to connect to an access point (AP) 106 operating on the 6 GHz band in accordance with one or more embodiments. The wireless communication system 100 includes a co-located AP device 102 and the client station 108 where the co-located AP device 102 includes two co-located APs 104, 106 (e.g., in a same physical location) that provide access to a network infrastructure such as a wired network 110 or Internet. The AP device 102 may implement the two APs 104, 106 on a system-on-a-chip (SoC) or as a multi-chip solution and the co-located APs have overlapping basic service set (BSS) coverage area which defines a collection of client stations which communicate with an AP. The wireless communication system 100 and components described herein may be implemented as one or more of analog circuitry, mix signal circuitry, memory circuitry, logic circuitry, and processing circuitry that executes code stored in a memory to perform disclosed functions.

The two APs 104, 106 of the AP device 102 are arranged to wirelessly communicate with the client station 108 via an air interface 150. Each AP 104, 106 includes a respective memory 112 having software stored thereon, a respective processor 114 for executing the software, and a respective wireless communication interface 116. The software may include specialized operating system for managing the hardware of the AP and routing software for routing communications according to an appropriate protocol such as IEEE 802.11. Data stored in memory 112 may include information about the client station 108 and AP 104, 106 including capabilities of the client station 108. The wireless interface 116 includes a transceiver and antenna to communicate with the client station 108 wirelessly over the air interface 150.

In one or more embodiments, the co-located AP device 102 may have a processor 126 for managing operations in common with both of the APs 104, 106 such as performing upper layer common media access (MAC) functionality while the APs 104, 106 may perform lower layer MAC and physical layer (PHY) functionality. In some embodiments, upper layer Media Access Control (MAC) functionalities (e.g., association establishment, reordering of frames, etc.) are implemented in as a common MAC and the APs implement lower layer MAC functionalities (e.g., backoff, frame transmission, frame reception, etc.).

In one or more embodiments, the APs 104, 106 may share one or more of a common memory and processor rather than using separate instantiations of the processor 114 and memory 112 to perform operations of the APs.

The client station 108 may include, but is not limited to, desktop computers, laptop computers, tablet computers, and mobile smart phones. Like the access point 104, 106, the client station 108 also has a memory 118 having software stored thereon, a processor 120 for executing the software, and a wireless interface 122. The memory 118 may store software, the processor 120 may execute the software, and the wireless interface 122 may facilitate communication with the AP device 102 wirelessly. The software may include a specialized operating system for managing the hardware of the client station 108 and routing software for routing communications according to an appropriate protocol such as IEEE 802.11. Data stored in memory 118 may include information about the client station 108 and AP 104, 106 including capabilities of the AP 104, 106. The wireless interface 122 includes a transceiver and antenna to communicate with the AP 104, 106 wirelessly over an air interface 150.

The wireless interface 116 of the AP 104, 106 may operate in a 6 GHz band, 2.4 GHz band, or 5 GHz band. In one or more embodiments, the AP device 102 may include one AP 106 which operates in the 6 GHz and another AP 104 that operates in a 2.4 GHz band. In one or more embodiments, the AP device 102 may include one AP 106 which operates in the 6 GHz and another AP 104 that operates in a 5 GHz band. The 2.4 GHz band and 5 GHz band may be referred to as non-6 GHz bands. Unlike, the AP 104, 106, the wireless interface 122 of the client station 108 may operate in one or more of the 6 GHz band, 2.4 GHz band, or 5 GHz band.

The wireless interface 116 of the AP 104, 106 or wireless interface 122 of the client station 108 modulates electromagnetic waves in the 2.4 GHz frequency band, the 5 GHZ frequency band, or the 6 GHz frequency band. The wireless interface 116 of the AP 104, 106 and wireless interface 122 of the client station 108 may facilitate transmitting data on a number of channels associated with a particular frequency band. Each channel may vary slightly in frequency within the respective frequency band. According to Institute of Electrical and Electronic Engineers (IEEE) 802.11 networking standards, independent and non-overlapping channels within the 2.4 GHz frequency band are spaced 25 megahertz (MHz) apart while independent channels within the 5 GHz and 6 GHz frequency bands are spaced 20 MHz apart. Within the 2.4 GHz frequency band, the wireless communication interface 116 can typically support up to three primary channels and 14 non-overlapping channels. If a channel is not available to the client station 108 for transmission, then the client station 108 will need to delay its transmission and increasing latency for transmission. The 5 GHz band and 6 GHz band is generally less crowded compared to the 2.4 GHz and has less interference and less chances for medium contention. However, due to the smaller wavelengths associated with the 5 and 6 GHz frequency band, signals on the 5 and 6 GHz band generally has a smaller range. As a result, when the client station 108 is close enough to receive a strong signal on the 2.4 GHz band the client station 108 typically connects to the AP 104 operating on the 2.4 GHz band (non-6 GHz AP) rather than the AP operating on the 5 and 6 GHz band. Due to the smaller wavelengths associated with the 6 GHz frequency band compared to the 5 GHz frequency band, signals on the 6 GHz band generally has a smaller range than the 5 GHz frequency band. Similarly, the client station 108 which is capable of operating on the 5 GHz and 6 GHz band may choose to connect to the AP 104 operating on the 5 GHz band (non-6 GHz AP) rather than the AP 106 operating on the 6 GHZ band (6 GHz AP) even though the 6 GHz band brings added benefits to the operation in the 5 GHz band such as an exclusive channel tailored for data traffic.

Bandsteering is a process for persuading the client station 108 to connect to an AP operating on a particular band. The client device 108 which support multiple communication bands including the 6 GHz band are steered from connecting to the non-6 GHz AP 104 to connecting to the 6 GHz AP 106 which in one or more embodiments is co-located with the non-6 GHz AP 104 in the AP device 102.

Embodiments disclosed herein are directed to a method and system to bandsteer the client station 108 attempting to connect to the non-6 GHz AP 104 to connect to the 6 GHz AP 106 to make efficient use of available bands. The client station 108 which supports communication in a non-6 GHz band such as 2.4 GHz or 5 GHz and communication in the 6 GHz band are steered to connect to the 6 GHz AP 106 based on the memory 112 storing bandsteering logic 124 (which could be implemented in hardware circuitry and/or in software) for performing bandsteering during one or more of a capability detection phase, a scanning phase, an authentication/association phase, and an after connection phase associated with wireless communication. The capability detection phase involves determining whether the client station 108 is capable of transmitting in the 6 GHz band. Only if the client station 108 is capable is it steered to connect to the 6 GHz AP 106. Otherwise, the non-6 GHz AP allows connection. The scanning phase involves the client station 108 sending probe requests to connect to the non-6 GHz AP 104 when it is capable of operating on the 6 GHz band which the non-6 GHz AP 104 ignores. The non-6 GHz AP 104 ignores an estimated number probe requests on a non-6 GHz band to persuade the client station 108 to connect to the 6 GHz band. If the client station 108 connects to the 6 GHz AP 106, then the bandsteering process is terminated. If the client station 108 sends the estimated number of probe requests on the non-6 GHz band, then the client station 108 is allowed to connect to the non-6 GHz AP 104. When the client station 108 transmits an association request to the non-6 GHz AP 104 to establish the connection, the non-6 GHz AP 104 will reject the association request with an appropriate reason code. If the client station 108 connects to the 6 GHz AP 106, then the bandsteering process is terminated. Alternatively, the client station 108 may attempt to connect to the same non-6 GHz AP 104 again but this time the client station 108 is allowed to connect. For client stations which are already connected to the non-6 GHz AP 104, the non-6 GHz AP 104 sends a BSS Transition Management (BTM) request to steer the client station 108 to connect to the 6 GHz AP 106. If the client station 108 does not connect to the 6 GHz band after the BTM request, then the connection on the non-6 GHz band is terminated but if the client station 108 attempts to connect to the non-6 GHz AP 104 again, the connection to the non-6 GHz AP 104 is allowed. Advantageously, the non-6 GHz AP 104 is able to bandsteer the client station by providing multiple opportunities to connect to the 6 GHz AP 106 to make efficient use of the available band.

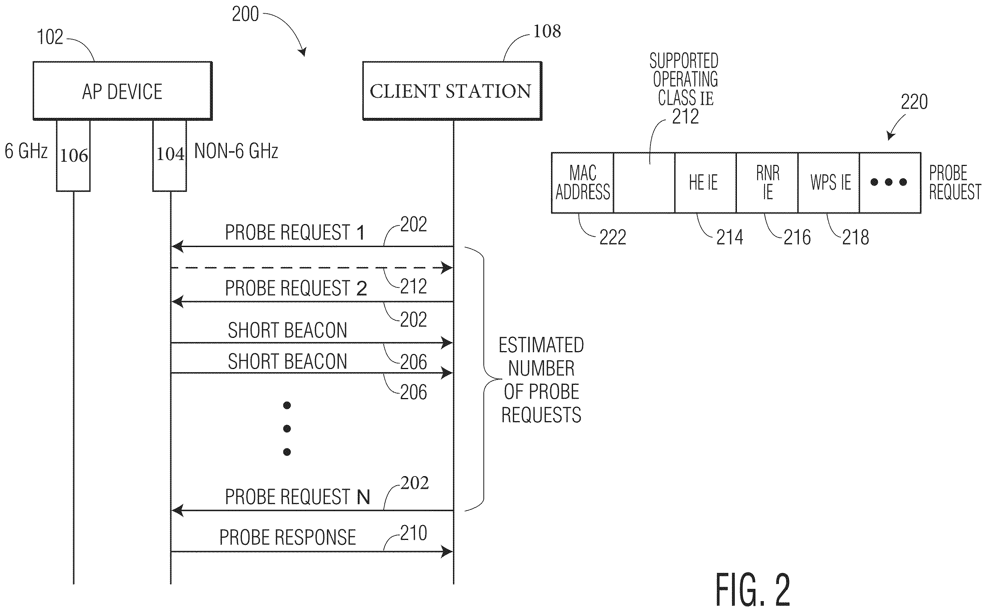

FIG. 2 illustrates example operations 200 associated with bandsteering the client station 108 to connect to the 6 GHz AP 106 before allowing a connection to the non-6 GHz AP 104 in accordance with one or more embodiments. The client station 108 may attempt to connect to the non-6 GHz AP 104. To attempt this connection, the client station 108 may send a plurality of probe requests 202 to the non-6 GHz AP 104. The probe request 202 may include various capabilities of the client station 108 that indicate whether the client station 108 is capable of operating on the 6 GHz band. The non-6 GHz AP 104 may bandsteer the client station 108 to connect to the 6 GHz AP 106 based on whether the client station 108 is capable of operating on the 6 GHz band to move association to the higher available band to improve user connection experiences.

The non-6 GHz AP 104 may determine this capability based on fields 220 of the probe request 202 defined by IEEE 802.11. Fields 220 of the probe request 202 may include a MAC address 222, a supported operating class information element (IE) 212, a MAC address 222, a high efficiency (HE) IE 214, a reduced neighbor report (RNR) IE 216, and a WiFi protected setup (WPS) IE 218. If the IE 212 contain one supported 6 GHz specific operating classes from 131 to 137, then the client station 108 is capable of operating on the 6 GHz band. As another example, if the HE IE 214 indicates capability 57, then the client station 108 is able to operate in the 6 GHz band. As yet another example, if the WPS IE 218 indicates 6 GHz support in an rf_band field then the client station 108 is able to operate in the 6 GHz band. As another example, if the RNR IE 216 includes entries for a 6 GHz AP, then the client station 108 is able to operate in the 6 GHz band. As yet another example, the client station 108 may have sent the probe request on the 6 GHz band. Processor 126 of the AP device may indicate to the non-6 GHz AP 104 that the client station 108 has sent a probe request 202 on the 6 GHz band. If the probe request 202 was sent on the 6 GHz band, then the client station 108 is capable of operating on the 6 GHz band. The capability of the client station 108 may be stored in the memory 112 with an indication of whether the client station 108 supports the communication on the 6 GHz band such as a media access (MAC) address 222 in the probe request 202. An indication of this capability is stored persistently in the memory 112 and may be used to determine that the client station 108 is 6 GHz capable if the client station 108 attempts to connect to the non-6 GHz AP 104 again at a later time and the probe request 202 at the later time does not have any indication whether the client station 108 is capable to communicating in the 6 GHz band. If the client station 108 is not capable of communicating on the 6 GHz band, then the client station 108 may be allowed to connect to the non-6 GHz AP 104 by sending a probe response 212.

The client station 108 transmits the plurality of probe requests 202 as part of a scanning phase to identify non-6 GHz APs to which it can connect. If the client station 108 is capable of communicating on the 6 GHz band, then the non-6 GHz AP 104 will not send the probe response 210 and not respond to an estimated number of probe requests 202 from the client station 108 on the non-6 GHz band to dissuade the client station 108 from attempting to connect to the non-6 GHz AP 104. The number of probe requests (N) to ignore may be client station specific based on its pattern of transmitting probe requests in a scan cycle to find a non-6 GHz AP to which to connect because different client stations do not send equal number of probe requests in the scan cycle. Ignoring a same number of probe requests for client stations of different types results in those client stations which send probe requests in a short period of time to be immediately allowed to connect to the non-6 GHz AP 104 while client stations which send probe requests over a longer period of time will be starved from connecting to the non-6 GHz AP 104 for a longer duration. Only after the client station 108 is persistent to connect to the non-6 GHz AP 104 by sending the estimated number of probe requests and the non-6 GHz AP 104 ignoring the estimated number of probe requests from the client station 108 will the non-6 GHz AP 104 then send the probe response 210 on the non-6 GHz band to allow the client station 108 to connect to the non-6 GHz AP 104.

In one or more embodiments, during the scanning phase and time that the non-6 GHz AP 104 is ignoring the probe requests 202, the non-6 GHz AP 104 may transmit one or more short beacons 206 (e.g., fast initial link setup - FILS defined by IEEE 802.11) which includes an RNR IE identifying proximate 6 GHz APs to help the client station 108 detect and connect to the 6 GHz AP 106 during this scan phase. The short beacons will be disabled, once the client station 108 sends a probe request on the 6 GHz band or when non-6 GHz AP 104 sends the probe response 210 to the client station 108 to connect to the non-6 GHz AP 104.

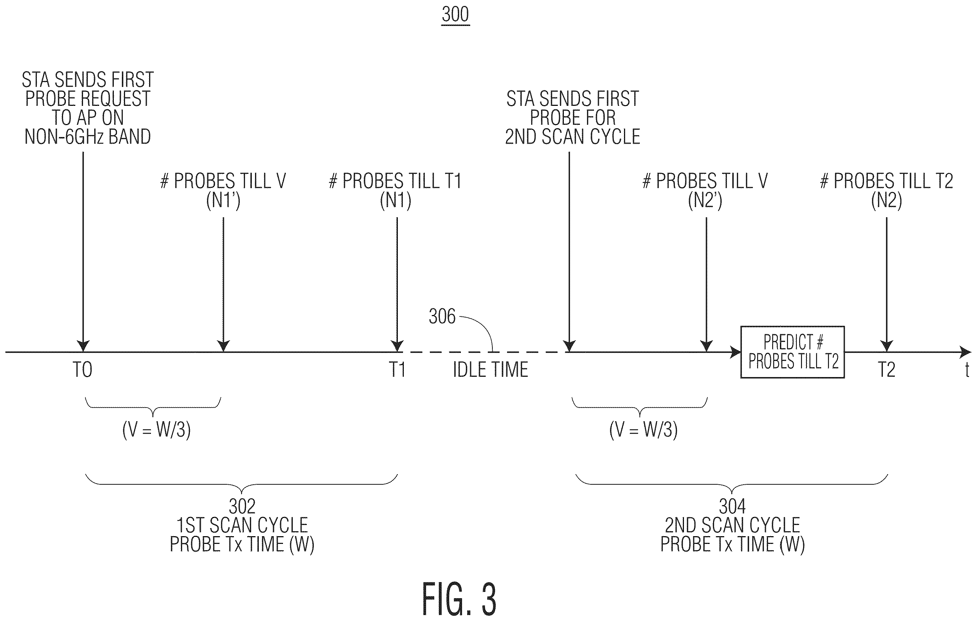

FIG. 3 illustrates an example two-stage process for the non-6 GHz AP 104 to estimate the number of transmitted probe requests from the client station 108 to ignore to bandsteer the client station to connect to the 6 GHz AP 106 in accordance with one or more embodiments. The estimation helps decide how many probe requests to ignore, based on how frequently probe requests are received from the client station 108 during the scanning phase rather a same number of probe requests being ignored for all types of client stations. Different types of client stations (e.g., different manufacturers, laptops, mobile phones) have different scanning pattern (i.e., scan duration on given channel, number of probes, and spacing between probes and spacing between scan cycles). The wide variation in scan behavior of the client stations requires the use of an algorithm which can reliably estimate number of probe requests to be ignored to bandsteer the client station 108 to connect to the 6 GHz AP 106.

Signaling 300 illustrates probe requests received by a non-6 GHz AP 104. The probe requests may be sent on a channel on which the non-6 GHz AP 104 is operating. The client station 108 may send a plurality of probe requests in a scan cycle to a non-6 GHz AP 104. The scan cycle is a period of time when the probe requests are sent over a channel monitored by the non-6 GHz AP 104. The client station 108 may repeat this process as one or more scan cycles 302, 304 separated by an idle time 306 when the client station 108 is sending probe requests on other channels which the non-6 GHz AP 104 does not monitor. W is a time that the client station 108 transmits probe requests on a channel in the scan cycle 302 which is the same time for different scan cycles. For the scan cycle 302, the non-6 GHz AP 104 may receive the probe requests transmitted in the scan cycle 302 and based on a timestamp included in the probe requests determine a duration W of the scan cycle as: W = (Timestamp for Last Probe Request - Timestamp for 1^{st} Probe request). The duration W is calculated based on the scan cycle 302 and the same value will be used for 2^{nd} scan cycle and subsequent scan cycles. V duration is a time for observing probe request behavior in the scan cycle 302. In one or more embodiments, V duration is calculated as V = W/3 which is defined to provide enough time to count the number of probe transmitted in a subset of the scan cycle 302 to determine a pattern of the probe requests in the scan cycle 302. A ratio of number of probe requests received in V and number of probe received in W is then determined as R = N1/N1'. This ratio provides a good estimation of the number of probe requests received in a subsequent scan cycle based on the number of probe requests received in V. Then, for a second scan cycle 304, the number of probes N2' is observed in the V duration which is multiplied by the ratio to get estimated probe transmitted for the second scan cycle 304 which is calculated as an estimated number of probes N2 = N2' * R in the second scan cycle 304 without having to actually wait for the entire scan cycle 304 to determine this amount. In one or more embodiments, a threshold of 70% is applied to a sum of the estimated number of probe requests N2 and number of probe requests N1 and this estimated number is a rounded down value of nearest integer to determine a threshold estimated number of probe requests to ignore before allowing the client station to connect on a non-6 GHz band: NT = floor((N1+N2) * 0.70). This threshold estimated number of probe requests is sufficient time for a variety of different types of client stations to connect to the 6 GHz AP 106. If the client station does not connect to the 6 GHz AP 106 after the threshold estimated number, then the client station is highly unlikely to connect resulting in allowing the client station to connect to the non-6 GHz AP 104 and the additional delay associated with ignoring additional probe requests before allowing connection to the non-6 GHz AP 104 does not need to be incurred. If the threshold estimated number of probe requests are received, then the non-6 GHz AP 104 sends the probe response 210 on the non-6 GHz band to allow the connection to the non-6 GHz AP 104. The threshold estimated number of probe responses is a sufficient number of probe requests to ignore that will be indicative of the client station 108 being persuaded to connect to the 6 GHz AP 106. If the client station 108 does not connect to the 6 GHz AP 106 after the non-6 GHz AP 104 receives the threshold estimated number of probe responses, the non-6 GHz AP 104 concludes that the client station 108 will not attempt to connect to the 6 GHz AP 106 when it is already not connected to the non-6 GHz AP 104.

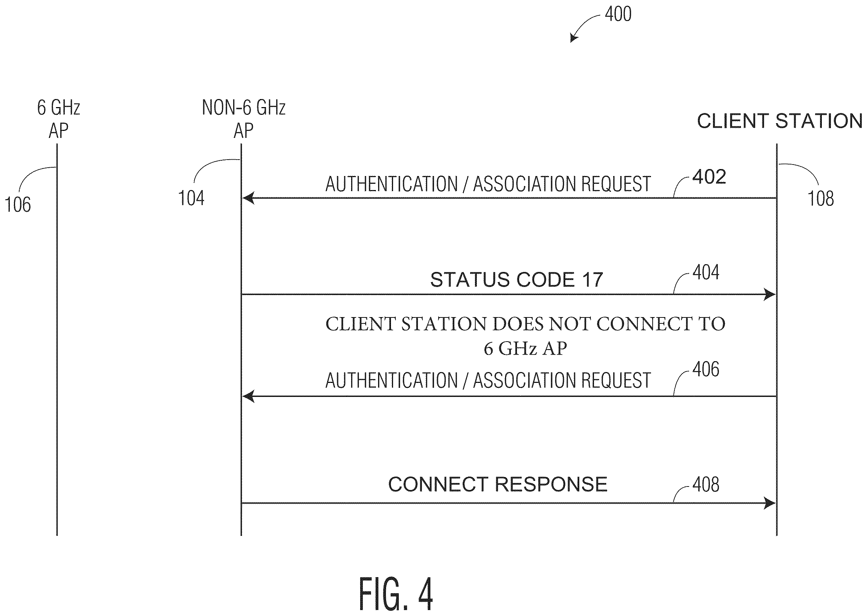

FIG. 4 illustrates an example authentication and association phase handling 400 to bandsteer the client station to connect to the 6 GHz AP 106 after the client station 108 is allowed to connect to the non-6 GHz AP 104 in accordance with one or more embodiments. The non-6 GHz AP 104 may respond to the probe request of the client station 108. The client station 108 and non-6 GHz AP 104 may enter into an authentication and association phase in an attempt for the client station 108 to connect to the non-6 GHz AP 104 after it receives the probe response 210. This process begins with the client station 108 transmitting an authentication/association request 402 from the client station 108 to the non-6 GHz AP 104. The authentication request may be a request to authorize communication with the non-6 GHz AP 104 and the association request may be a request to associate and communicate with the non-6 GHz AP 104. The non-6 GHz AP 104 may reject the request 402 by sending an association response 404 with appropriate reason code e.g., AP_UNABLE_TO_HANDLE_ NEW_STA = 17. If the client station 108 connects to the 6 GHz AP 106, then the bandsteering process is terminated. Alternatively, if the client station 108 is denied the connection to the non-6 GHz AP 104, the client station 108 may attempt a connection again by sending another authentication request 406 which is accepted by a connect response 408 sent by the non-6 GHz AP 104 allowing the client station 108 to connect to the non-6 GHz AP 104. Alternatively, the client station 108 may attempt a connection by sending a probe request to connect to the non-6 GHz AP 104 which is accepted. The non-6 GHz AP 104 defers further bandsteering to connect to the 6 GHz AP 106 until after the client station 103 is connected to the non-6 GHz AP 104.

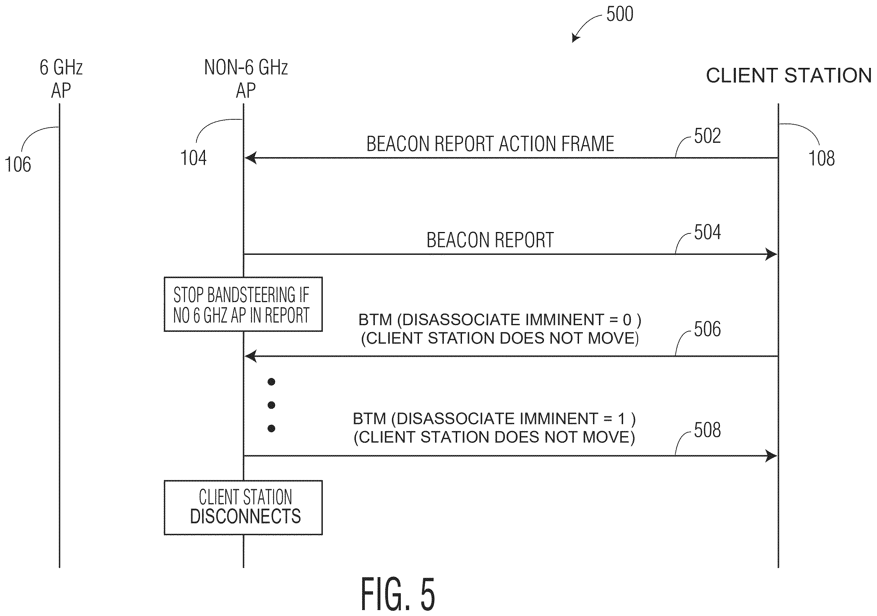

FIG. 5 illustrates example signaling 500 associated with bandsteering the client station 108 to connect to the 6 GHz AP 106 after the client station 108 is connected to the non-6 GHz AP 104 in accordance with one or more embodiments. The client station 108 may be connected to the non-6 GHz AP 104. The non-6 GHz AP 104 may identify whether the client station 108 has a 6 GHz capability by sending a Beacon Report action frame 502 which is part of Radio Measurement Action frame defined by IEEE 802.11 k/v to trigger an action. This type of action frame is identified by various parameters including category 0x5, Action code 0x0, Measurement request (Tag number=0x26), Measurement Request Type: Beacon Request (0x05). The action frame 502 is a basic requirement for roaming and for the client station 104 to identify other AP to which to connect in a different BSS but in this case it is used to determine 6 GHz capability of the client station 104 and ability to connect to the 6 GHz AP 106 which is co-located with the non-6 GHz AP 104 directly after the connection to the non-6 GHz AP 104 is established. In response to receiving the action frame 502, the client station 108 sends the beacon report 504 to the non-6 GHz AP 104 with a list of AP's which are known to the client station 108 and a channel number of known APs. If this list identifies any 6 GHz APs that means the client station 108 supports 6 GHz operation and can connect to the 6 GHz AP 106. If the list does not identify any 6 GHz AP that means the client station 108 does not support 6 GHz operation. Bandsteering is stopped and the connection is allowed on the non-6 GHz AP 104.

The non-6 GHz AP 104 may also attempt to move the client station 108 to the 6 GHz AP 106 by sending a BSS Transition Management (BTM) request 506 defined by IEEE 802.11. The BTM frame 506 will contain a 6 GHz AP 106 basic service set identification (BSSID) and channel information. It is assumed that non-6 GHz AP 104 and 6 GHz AP 106 are configured with same BSSID and password. If the client station 108 is found to be 6 GHz capable, the non-6 GHz AP 104 will trigger a configured number of BTM Requests frames 506 with disassoc_imminent bit set to 0 to be transmitted in an interval of predefined seconds to the client station 108. It is expected that the client station 108 will process these BTM requests and decide to connect to the 6 GHz AP 106. If the client station 108 does not attempt to connect to the 6 GHz AP 106 it indicates that it has decided to continue to stay connected to the non-6 GHz AP 104. The non-6 GHz AP 104 will send one more BTM request frame 508 with disassoc_imminent bit set to 1 to the client station 108 for a last attempt to bandsteer the client station 108 to connect to the 6 GHz AP 106. Setting disassoc_imminent bit to 1 indicates that the non-6 GHz AP 104 is forcing the client station 108 to disconnect (e.g., disassociate) from the non-6 GHz AP 104. The non-6 GHz AP 104 may also deauthenticate the client station 108 after a timer expiration. The client station 108 disconnects from the non-6 GHz AP 104 and then starts scanning again to find a best match for connecting to an AP. The client station 108 may then connect to the 6 GHz AP 106 during this phase or the client station 108 may connect to the non-6 GHz AP 104 again. If the client station connects to the 6 GHz AP 106, then the bandsteering is stopped since the client station 108 is connected to a desired band. If the client station 108 connects to non-6 GHz AP 104 again, then the non-6 GHz AP 104 allows the connection and also stops the bandsteering to the 6 GHz AP 106. The memory 112 may also be updated to indicate the capabilities of the client station as indicated by the beacon report or if the client station 108 connects to the 6 GHz AP 106 to avoid a need to bandsteer in the future.

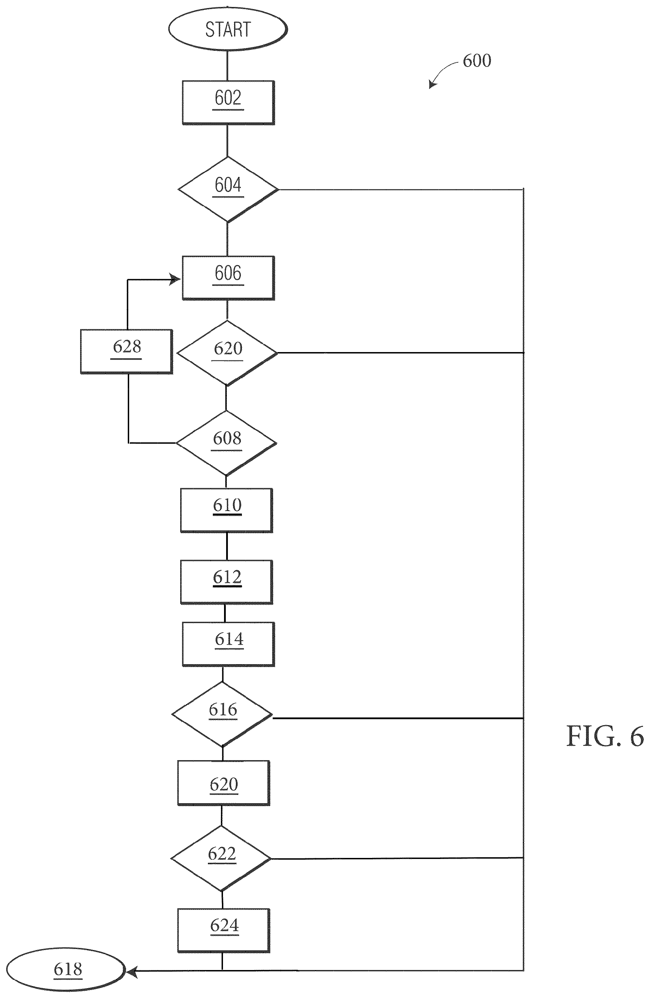

FIG. 6 is a flow chart of functions 600 associated with bandsteering the client station to connect to the 6 GHz AP in accordance with one or more embodiments. The functions may be performed by the AP device 102 in one or more embodiments.

At 602, a non-6 GHz AP receives a probe request from a client station. The probe request may be transmitted by the client station to attempt to connect to the non-6 GHz AP. At 604, the non-6 GHz AP determines whether the client station is capable of connecting to a 6 GHz AP based on capabilities indicated in the probe request. The probe request may have various fields which indicate these capabilities including an operating class, HE IE, RNR IE, WPS IE, or that the client station sent a probe request to connect to a 6 GHz AP. If the client station is not 6 GHz capable, then at 618, the non-6 GHz AP allows the connection to the 6 GHz AP. If the client station is 6 GHz capable, then at 606, the non-6 GHz AP ignores probe request. The ignoring of the probe requests is an attempt to bandsteer the client station to connect to the 6 GHz AP. At 620, a determination is made if the client station 108 connects to the 6 GHz AP. If the client station attempts to connect to the 6 GHz AP, then the bandsteering process is terminated after allowing the connection at 618. Otherwise, at 608, a determination is made whether an estimated number of probe requests is ignored which is specific to a number of probe requests sent in a scan cycle by the client station and is not a fixed number for all types of client stations. If the estimated number of probe requests are not ignored, then processing returns to 606 to ignore another probe request which is received at 628. Otherwise, at 610 the non-6 GHz AP sends a probe response which indicates that the client station is allowed to connect to the non-6 GHz AP. At 612, an authorization request to connect to the non-6 GHz AP is received from the client station. At 614, the non-6 GHz AP sends a denial to the authorization request. The denial is an attempt to bandsteer the client station to connect to the 6 GHz. At 616, a determination is made whether the client station 108 attempts to connect to the 6 GHz AP 106. If the client station attempts to connect to the 6 GHz AP, then the bandsteering process is terminated and the connection is allowed at 618. Otherwise, the non-6 GHz AP allows the client station to connect to the non-6 GHz AP based on another attempt to connect. At 620, the non-6 GHz AP sends a Beacon Report action frame to the client station and receives from the client station a beacon report. The beacon report is received during the bandsteering process rather than during a roaming process where the client station is transitioning communication to another AP as the client station is moving within a communication network. At 622, the non-6 GHz AP determines whether the client device is 6 GHz capable. If the client device is not 6 GHz capable, then the client station is allowed to connect to the non-6 GHz AP at 618. If the client device is 6 GHz capable, then at 624, the non-6 GHz AP sends a BTM request. At 624, the non-6 GHz AP forces the disconnection of the client station when the client station is still connected to the non-6 GHz AP after sending the BTM request. The client station may then connect with the 6 GHz AP or connect again to the non-6 GHz AP which in this case is allowed at 618. The bandsteering which is disclosed herein provides several opportunities for the client station to connect to the 6 GHz AP before allowing the connection to remain with the non-6 GHz AP.

In one or more embodiments, a method for bandsteering a client station to connect to a 6 GHz access point (AP) is disclosed. The method includes: receiving, by the non-6 GHz AP, a plurality of probe requests from the client station; determining, by the non-6 GHz AP, that the client station is capable of communicating with the 6 GHz AP based on an indication in the probe requests; ignoring a threshold estimated number of probe requests transmitted by the client station to bandsteeer the client station to connect to the 6 GHz AP based on the determination, the threshold based on a number of probe requests transmitted by the client station in a scan cycle; and transmitting, by the non-6 GHz AP, a probe response after the threshold estimated number of the probe requests are transmitted by the client station, wherein the client station is allowed to connect to the non-6 GHz AP. In one or more embodiment, the method further includes determining a time W between a first probe request and a last probe request received in a first scan cycle and a number of probe requests received in a subset of the time W; computing a ratio based on the number of probe requests received in the subset and a number of probe requests received in the time W; and determining an estimated number of probe requests transmitted by the client station in a second scan cycle based on a number of probe requests N2' received in a subset of time W of the second scan cycle and the ratio. In one or more embodiments, determining the threshold estimated number of probe requests includes determining the number of probe requests N2' received in the subset of the time W of the second scan cycle; and weighing N2' by the ratio to determine the estimated number of probe requests in the second scan cycle. In one or more embodiments, the method further includes applying a threshold of 70% to a sum of the estimated number of probe requests transmitted by the client station in the second scan cycle and the number of probe requests received in the first scan cycle which is rounded down to a nearest integer to determine the threshold estimated number of probe requests transmitted. In one or more embodiments, the method further includes receiving an authentication/association request frame from the client station and transmitting a response which indicates that the client station is denied the connection; and allowing the client station to connect to the non-6 GHz AP based on receiving another probe request from the client station based on the denial. In one or more embodiments, the method further includes transmitting short beacons with a reduced neighbor report (RNR) to identify 6 GHz APs to the client stations while the probe requests transmitted by the client station are being ignored. In one or more embodiments, the method further includes transmitting a beacon request action frame after the client station connects to the non-6 GHz AP to determine that the 6 GHz AP to which the client station is to connect is known to the client station, the non-6 GHz AP to which the client station is connected is co-located with the 6 GHz AP; and bandsteering the client station to connect to the 6 GHz AP. In one or more embodiments, determining that the client station is operable to communicate in a 6 GHz band is based on an indication in the probe request of the 6 GHz band capability of the client station. In one or more embodiments, the indication in the probe request is one or more of an indicated operating class, high efficiency 6 GHz band capability information element, a reduced neighbor report information element, and a WiFi protected service (WPS) information element. In one or more embodiments, the method further includes transmitting a BSS transition management (BTM) frame to have the client station connect to the 6 GHz AP after connecting to the non-6 GHz AP, forcing the client station to disconnect from the non-6 GHz AP based on the BTM frame; and allowing the client station to reconnect to the non-6 GHz AP after forcing the client station to disconnect from the non-6 GHz AP. In one or more embodiments, the non-6 GHz band is a 2.4 GHz band or 5 GHz band.

In one or more embodiments, a non-6 GHz access point is arranged with circuitry to receive a plurality of probe requests from the client station; determine that a client station is operable to communicate with the 6 GHz AP based on an indication in the probe requests; ignore a threshold estimated number of probe requests transmitted by the client station to bandsteeer the client station to connect to the 6 GHz AP based on the determination, the threshold based on a number of probe requests transmitted by the client station in a scan cycle, and transmit a probe response after the threshold estimated number of the probe requests are transmitted by the client station, wherein the client station is allowed to connect to the non-6 GHz AP. In one or more embodiments, the access point further includes circuitry to determine a time W between a first probe request and a last probe request received in a first scan cycle and a number of probe requests received in a subset of the time W; compute a ratio based on the number of probe requests received in the subset and a number of probe requests received in the time W; and determine an estimated number of probe requests transmitted by the client station in a second scan cycle based on a number of probe requests transmitted in a subset of time W of the second scan cycle and the ratio. In one or more embodiments, the circuitry arranged to determine the estimated number of probe requests includes circuitry arranged to calculate a number of probe requests N2' received in the subset of the time W of the second scan cycle; and weighing N2' by the ratio to determine the estimated number of probe requests transmitted by the client station in the second scan cycle. In one or more embodiments, the access point further includes circuitry arranged to apply a threshold of 70% to a sum of the estimated number of probe requests transmitted by the client station in the second scan cycle and the number of probe requests received in the first scan cycle which is rounded down to a nearest integer to determine the threshold estimated number of probe requests transmitted. In one or more embodiments, the access point further includes circuitry arranged to receive an authentication/association request frame from the client station and transmit a response which indicates that the client station is denied the connection; and allow the client station to connect to the non-6 GHz AP based on receiving another probe request based on the denial. In one or more embodiments, the access point further includes circuitry arranged to transmit short beacons with a reduced neighbor report (RNR) to identify 6 GHz APs to the client station while the probe requests transmitted by the client station are being ignored. In one or more embodiments, the access point further includes circuitry arranged to transmit a beacon request action frame after the client station connects to the non-6 GHz AP to identify that the 6 GHz AP to which the client station is to connect is known to the client station, the non-6 GHz AP to which the client station is connected is co-located with the 6 GHz AP; and bandsteer the client station to connect to the 6 GHz AP. In one or more embodiments, the circuitry arranged to determine that the client station is operable to communicate in a 6 GHz band is based on the probe request indicating the 6 GHz band capability of the client station. In one or more embodiments, the access point further includes circuitry arranged to transmit a BSS transition management (BTM) frame to have the client station to connect to the 6 GHz AP after connecting to the non-6 GHz AP, force the client station to disconnect from the non-6 GHz AP based on the BTM frame; and allow the client station to reconnect to the non-6 GHz AP after forcing the client station to disconnect from the non-6 GHz AP.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. A method for bandsteering a client station to connect to a 6 GHz access point (AP), the method comprising:
receiving, by the non-6 GHz AP, a plurality of probe requests from the client station;
determining, by the non-6 GHz AP, that the client station is capable of communicating with the 6 GHz AP based on an indication in the probe requests;
ignoring a threshold estimated number of probe requests transmitted by the client station to bandsteer the client station to connect to the 6 GHz AP based on the determination, the threshold based on a number of probe requests transmitted by the client station in a scan cycle; and
transmitting, by the non-6 GHz AP, a probe response after the threshold estimated number of the probe requests are transmitted by the client station, wherein the client station is allowed to connect to the non-6 GHz AP.

2. The method of claim 1, further comprising determining a time W between a first probe request and a last probe request received in a first scan cycle and a number of probe requests received in a subset of the time W; computing a ratio based on the number of probe requests received in the subset and a number of probe requests received in the time W; and determining an estimated number of probe requests transmitted by the client station in a second scan cycle based on a number of probe requests N2' received in a subset of time W of the second scan cycle and the ratio.

3. The method of claim 2, wherein determining the threshold estimated number of probe requests comprises determining the number of probe requests N2' received in the subset of the time W of the second scan cycle; and weighing N2' by the ratio to determine the estimated number of probe requests transmitted by the client station in the second scan cycle.

4. The method of claim 3, further comprising applying a threshold of 70% to a sum of the estimated number of probe requests transmitted by the client station in the second scan cycle and the number of probe requests received in the first scan cycle which is rounded down to a nearest integer to determine the threshold estimated number of probe requests transmitted.

5. The method of any preceding claim, further comprising receiving an authentication/association request frame from the client station and transmitting a response which indicates that the client station is denied the connection; and allowing the client station to connect to the non-6 GHz AP based on receiving another probe request from the client station based on the denial.

6. The method of any preceding claim, further comprising transmitting short beacons with a reduced neighbor report (RNR) to identify 6 GHz APs to the client station while the probe requests transmitted by the client station are being ignored.

7. The method of any preceding claim, further comprising transmitting a beacon request action frame after the client station connects to the non-6 GHz AP to determine that the client station is able to connect to the 6 GHz AP, the non-6 GHz AP to which the client station is connected is co-located with the 6 GHz AP; and bandsteering the client station to connect to the 6 GHz AP.

8. The method of any preceding claim, wherein determining that the client station is operable to communicate in a 6 GHz band is based on an indication in the probe request of the 6 GHz band capability of the client station.

9. The method of claim 8, wherein the indication in the probe request is one or more of an indicated operating class, high efficiency 6 GHz band capability information element, a reduced neighbor report information element, and a WiFi protected service, WPS, information element.

10. The method of any preceding claim, further comprising transmitting a BSS transition management (BTM) frame to have the client station connect to the 6 GHz AP after connecting to the non-6 GHz AP, forcing the client station to disconnect from the non-6 GHz AP based on the BTM frame; and allowing the client station to reconnect to the non-6 GHz AP after forcing the client station to disconnect from the non-6 GHz AP.

11. The method of any preceding claim, wherein the non-6 GHz band is a 2.4 GHz band or 5 GHz band.

12. A non-6 GHz access point arranged with circuitry to receive a plurality of probe requests from the client station; determine that a client station is operable to communicate with the 6 GHz AP based on an indication in the probe requests; ignore a threshold estimated number of probe requests transmitted by the client station to bandsteeer the client station to connect to the 6 GHz AP based on the determination, the threshold based on a number of probe requests transmitted by the client station in a scan cycle, and transmit a probe response after the threshold estimated number of the probe requests are transmitted by the client station, wherein the client station is allowed to connect to the non-6 GHz AP.

13. The non-6 GHz access point of claim 12, further arranged with circuitry arranged to determine a time W between a first probe request and a last probe request received in a first scan cycle and a number of probe requests received in a subset of the time W; compute a ratio based on the number of probe requests received in the subset and a number of probe requests received in the time W; and determine an estimated number of probe requests transmitted by the client station in a second scan cycle based on a number of probe requests N2' received in a subset of time W of the second scan cycle and the ratio.

14. The non-6 GHz access point of claim 13, wherein the circuitry arranged to determine the estimated number of probe requests comprises circuitry arranged to determine the number of probe requests N2' received in the subset of the time W of the second scan cycle; and weighing N2' by the ratio to determine the estimated number of probe requests transmitted by the client station in the second scan cycle.

15. The non-6 GHz access point of claim **14,** further comprising circuitry arranged to apply a threshold of 70% to a sum of the estimated number of probe requests transmitted by the client station in the second scan cycle and the number of probe requests received in the first scan cycle which is rounded down to a nearest integer to determine the threshold estimated number of probe requests transmitted.
